# EUROPEAN PATENT APPLICATION

(11) **EP 1 701 518 A2**
(43) Date of publication of application: **13.09.2006**
(21) Application number: 06004476.5
(22) Date of filing: 06.03.2006
(51) Int. Cl.: H04M 1/02

(54) **Apparatus for rotating camera lens module for mobile terminal**

(30) Priority: 04.03.2005 KR 2005018071
(71) Applicant: Samsung Electronics Co., Ltd., Suwon-si, Gyeonggi-Do (KR)
(72) Inventor: Kim, Ju-Hee, Yeongtong-gu Suwon-si Gyeonggi-do (KR)
(74) Representative: Lang, Johannes

(57) **Abstract**

An apparatus for rotating a camera lens module for a mobile terminal, which rotates the camera lens module (2) according to sliding of a lever is provided. The apparatus includes a slidable camera lever (20) which is exposed to the outside of the mobile terminal (10), and a rotating unit for rotating the camera lens module clockwise and counterclockwise according to the sliding of the camera lever (31). The opening of a camera lens of the camera lens module is exposed to the front or back side of the mobile terminal, or hidden inside the mobile terminal, depending on the rotation of the camera lens module.

## Description

### BACKGROUND OF THE INVENTION

### Field of the Invention:

The present invention generally relates to an apparatus for rotating a camera lens module for a mobile terminal. More particularly, the present invention relates to an apparatus for rotating a camera lens module for a mobile terminal that rotates the camera lens module according to the sliding of a lever.

### Description of the Related Art:

In general, a "portable communication apparatus" is an electronic apparatus which a user can carry to perform wireless communication. Examples of portable communication apparatuses include HHPs (hand held phones), cellular phones, digital phones, PCS (personal communication service) phones, and PDAs (personal digital assistants). Conventional portable communication apparatuses may be classified into various types according to their appearance. For example, wireless terminals can be classified into bar-type wireless terminals, flip-type wireless terminals, and folding-type wireless terminals. Bar-type wireless terminals have a single housing shaped like a bar. Flip-type wireless terminals have a flip which is pivotally mounted to a bar-shaped housing by a hinge unit. Folding-type wireless terminal have a folder coupled to a single bar-shaped housing by a hinge unit in such a manner that the folder can be rotated in order to be folded to or unfolded from the housing.

For image communication, conventional portable communication apparatuses are equipped with a photographic means or a camera lens which enables a user to perform image communication with another user or take a picture of a desired subject.

Flip-type terminals and folding-type terminals now tend to be widely used as portable communication apparatuses mainly for voice or video communication.

Flip-type terminals and folding-type terminals have superior sound sensitivity. They are also advantageous because the main body of the terminals is compact and light. Consequently, they have come into common use.

In general, a camera lens is mounted in the main body of a flip-type terminal or in a hinge unit and a folder of a folding-type terminal.

A camera phone having a camera lens module is easy to carry anywhere and can take still or moving pictures through a camera lens.

In a conventional camera phone, the camera lens is either fixed to the terminal or rotates with respect to a terminal. When the camera lens rotates with respect to a terminal, users directly rotate the housing of the camera lens with their fingers. This makes the use of a camera lens module inefficient and may cause breakage due to user's inaccurate force control.

Moreover, the surface of a camera lens is frequency contaminated with dust or foreign substances. If a still or moving picture of a subject is taken through a contaminated lens, the photographed picture may be blurry or unclear.

In addition, since a camera lens of a conventional camera phone is always exposed, other people may suspect that a user intends to take pictures, regardless of the user's actual intentions.

Accordingly, there is a need for a portable communication apparatus with an improved camera lens module.

### SUMMARY OF THE INVENTION

An aspect of the present invention is to solve at least the above problems and/or disadvantages and to provide at least the advantages described below. Accordingly, an aspect of the present invention is to provide an apparatus for rotating a camera lens module for a mobile terminal, which improves efficiency in the use of the camera lens module by rotating the camera lens module by sliding a lever.

It is another object of the present invention to provide an apparatus for rotating a camera lens module for a mobile terminal, which allows an opening of a camera lens to be exposed to the outside or hidden inside the mobile terminal by gradually rotating the camera lens module.

To achieve the above and other objects, an apparatus for rotating a camera lens module in a mobile terminal is provided. The apparatus includes a slidable camera lever which is exposed outside the mobile terminal, and a rotating unit for rotating the camera lens module clockwise and counterclockwise according to the sliding of the camera lever. The camera lens of the camera lens module is exposed to the front or back side of the mobile terminal or hidden inside the mobile terminal by the rotations of the camera lens module.

### BRIEF DESCRIPTION OF THE DRAWINGS

The above and other objects, features, and advantages of certain embodiments of the present invention will be more apparent from the following description taken in conjunction with the accompanying drawings, in which:
FIG. 1 is an exploded perspective view of an apparatus for rotating a camera lens module for a mobile terminal according to an embodiment of the present invention;
FIG. 2 is an enlarged exploded perspective view of the portion A of FIG. 1;
FIG. 3 is a perspective view illustrating an assembly of components of an apparatus for rotating a camera lens module for a mobile terminal according to an embodiment of the present invention;
FIG. 4 is a perspective view illustrating the front side of a mobile terminal before the operation of an apparatus for rotating a camera lens module for a mobile terminal according to an embodiment of the present invention;
FIG. 5 is a perspective view illustrating the back side of a mobile terminal before the operation of an apparatus for rotating a camera lens module for a mobile terminal according to an embodiment of the present invention;
FIG. 6 is a cross-sectional perspective view of an apparatus for rotating a camera lens module for a mobile terminal according to an embodiment of the present invention before the apparatus has been operated;
FIG. 7 is a cross-sectional side view of an apparatus for rotating a camera lens module for a mobile terminal according to an embodiment of the present invention before the apparatus has been operated;
FIG. 8 is a cross-sectional plan view of an apparatus for rotating a camera lens module for a mobile terminal according to an embodiment of the present invention before the apparatus has been operated;
FIG. 9 is a perspective view illustrating a 90° rotation of an apparatus for rotating a camera lens module for a mobile terminal according to an embodiment of the present invention;
FIG. 10 is a cross-sectional perspective view illustrating a 90° rotation of an apparatus for rotating a camera lens module for a mobile tenninal according to an embodiment of the present invention;
FIG. 11 is a cross-sectional side view illustrating a 90° rotation of an apparatus for rotating a camera lens module for a mobile terminal according to an embodiment of the present invention;
FIG. 12 is a cross-sectional plan view illustrating a 90° rotation of an apparatus for rotating a camera lens module for a mobile tenninal according to an embodiment of the present invention;
FIG. 13 is an enlarged plan view of the portion B of FIG. 12;
FIG. 14 is a perspective view illustrating the front side of a mobile terminal when an apparatus for rotating a camera lens module for a mobile terminal according to an embodiment of the present invention rotates 180°;
FIG. 15 a perspective view illustrating the back side of a mobile terminal when an apparatus for rotating a camera lens module for a mobile terminal according to an embodiment of the present invention rotates 180°;
FIG. 16 is a cross-sectional perspective view illustrating a 180° rotation of an apparatus for rotating a camera lens module for a mobile terminal according to an embodiment of the present invention;
FIG. 17 a cross-sectional side view illustrating a 180° rotation of an apparatus for rotating a camera lens module for a mobile terminal according to an embodiment of the present invention; and
FIG. 18 is a cross-sectional plan view illustrating a 180° rotation of an apparatus for rotating a camera lens module for a mobile terminal according to an embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

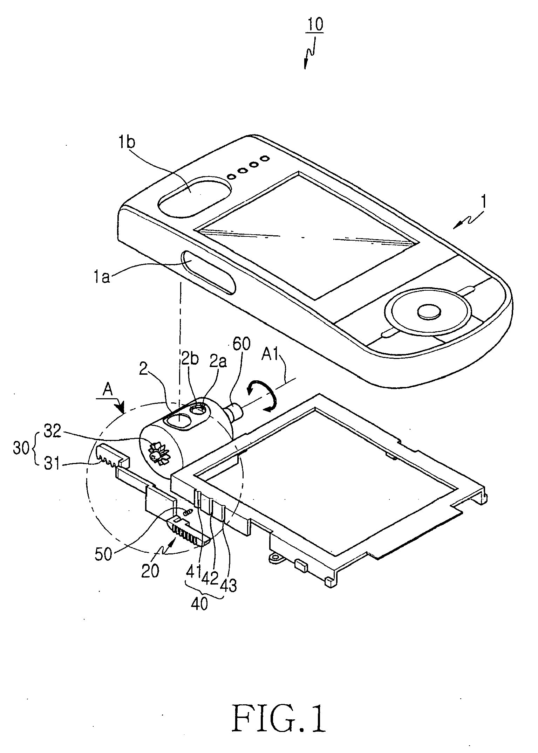

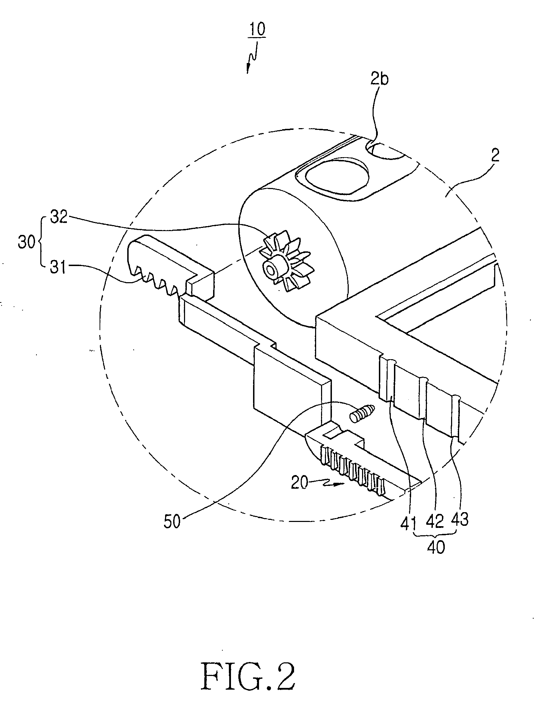

Referring to FIGS. 1 and 2, an apparatus 10 for rotating a camera lens module for a mobile terminal 1 includes a camera lever 20 and a rotating unit 30. The camera lever 20 is exposed outside the mobile terminal 1 and is mounted at the side of the mobile terminal 1 to slide along a longitudinal direction of the mobile terminal 1. The rotating unit 30 is mounted adjacent to the camera lever 20 to rotate the camera lens module 2 clockwise or counterclockwise according to the sliding of the camera lever 20 and to expose an opening 2b of a camera lens 2a to the front or back side of the mobile terminal 1 or hide the opening 2b inside the mobile terminal 1.

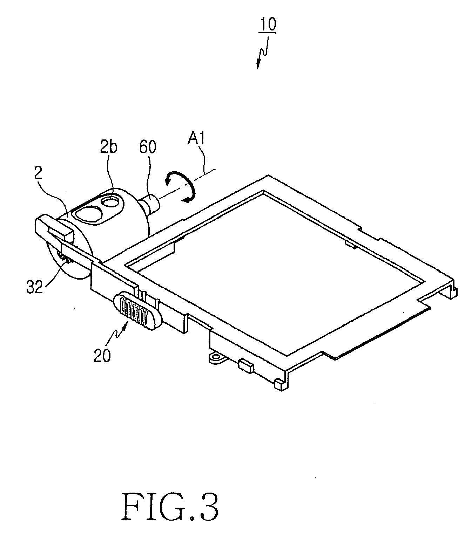

Referring to FIGS. 2 and 3, the rotating unit 30 includes a rack gear 31 and a pinion gear 32. The rack gear 31 is mounted at an end of the camera lever 20 to be engaged with the pinion gear 32. The pinion gear 32 is engaged with the rack gear 31 and is provided in the camera lens module 2 to convert sliding of the camera lever 20 into rotation of the camera lens module 2.

Referring to FIG. 3, a hinge axis A1 is provided at a side of the camera lens module 2. Preferably, the hinge axis Al is substantially perpendicular to the longitudinal direction of the mobile terminal 1. The camera module 2 includes a hinge unit 60 to rotate the camera lens module 2 along the hinge axis A1.

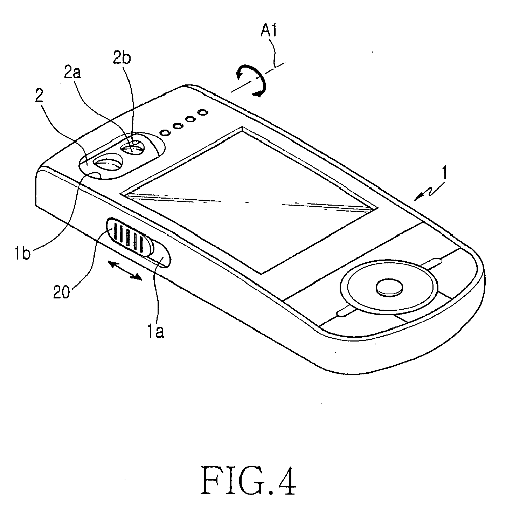

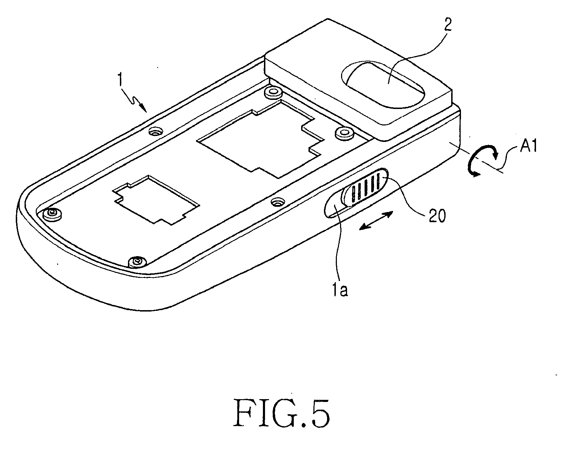

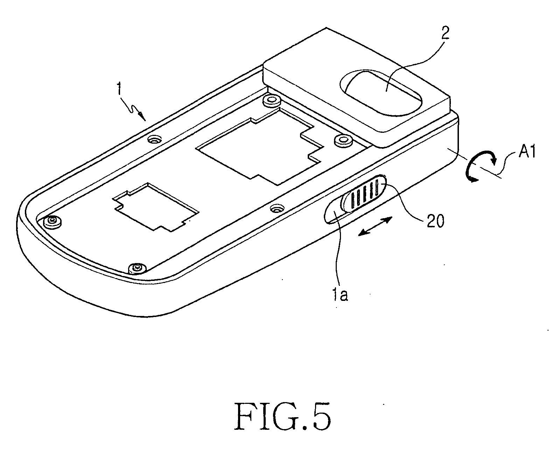

Referring to FIGS. 4 and 5, in the mobile terminal 1, a movement hole 1a is formed to expose the camera lever 20 to the outside and allows the camera lever 20 to slide. At least one exposure opening 1b is formed in the front or back side of the mobile terminal 1 to expose the opening 2b of the camera lens 2a to the front or back side of the mobile terminal 1, depending on whether the camera lens module 2 is rotated clockwise or counterclockwise.

Referring to FIG. 4, the camera lever 20 moves linearly in the longitudinal direction of the mobile terminal 1. Preferably, the camera lever 20 is mounted at the side of the mobile terminal 1 to allow a user to conveniently use the camera lever 20.

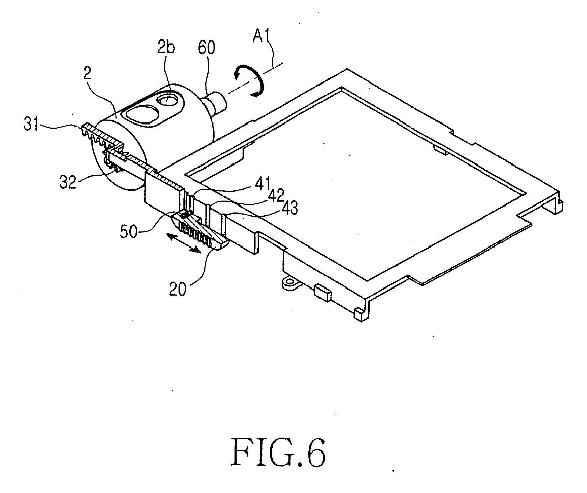

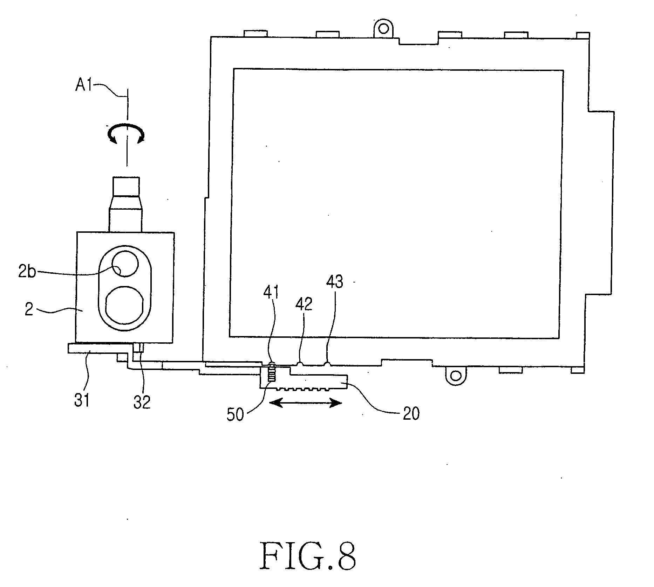

Referring to FIGS. 6, 7, 8, 12, and 13, at least one stopper member 40 is provided at the back side of the camera lever 20. The stopper member 40 is comprised of a first stopper groove 41, a second stopper groove 42, and a third stopper groove 43. The stopper member allows the gradual sliding of the camera lever 20 and restricts the rotation of the camera lens module 2 according to the insertion or detachment of a detent member, or spring, 50 mounted in the camera lever 20 into one of the stopper grooves.

Referring to FIGS. 6 through 8, the first stopper groove 41 is formed at a position in the back side of the camera lever 20 such that the detent spring 50 is inserted into the first stopper groove 41 when the opening 2b of the camera lens 2a faces the fi-ont side of the mobile terminal 1.

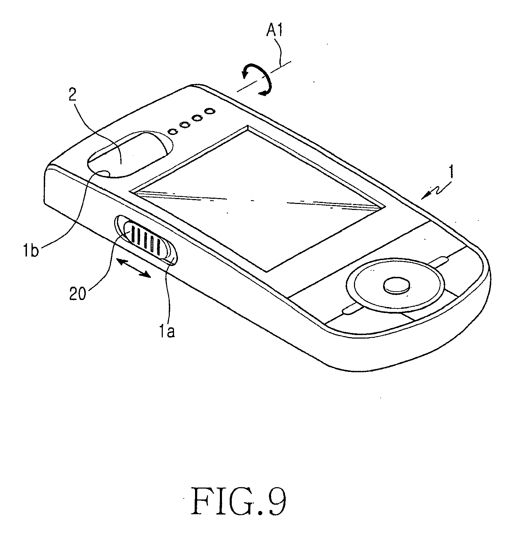

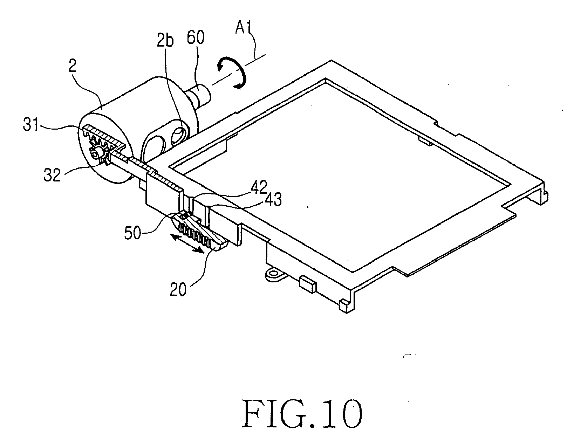

Referring to FIGS. 9 through 13, the second stopper groove 42 is fonned adjacent to the first stopper groove 41 such that once the camera lever 20 slides in the longitudinal direction, the detent spring 50 is detached from the first stopper groove 41, and the detent spring 50 is inserted into the second stopper groove 42 when the camera lens module 2 has rotated a predetennined amount and is hidden inside the mobile terminal l.

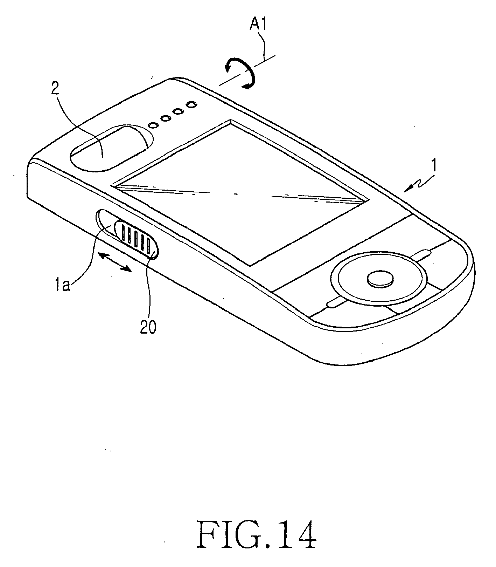

Referring to FIGS. 14 through 18, the third stopper groove 43 is formed adjacent to the second stopper groove 42 such that once the camera lever 20 slides again in the longitudinal direction, the detent spring 50 is detached from the second stopper groove 42 and the detent spring 50 is inserted into the second stopper groove 52 when the camera lens module 2 has rotated a predetermined amount and is exposed to the back side of the mobile terminal 1.

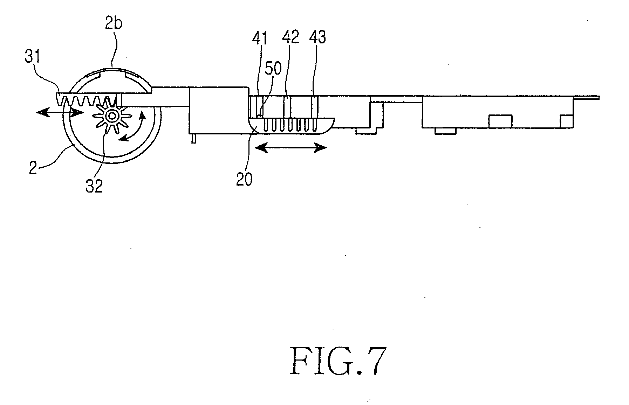

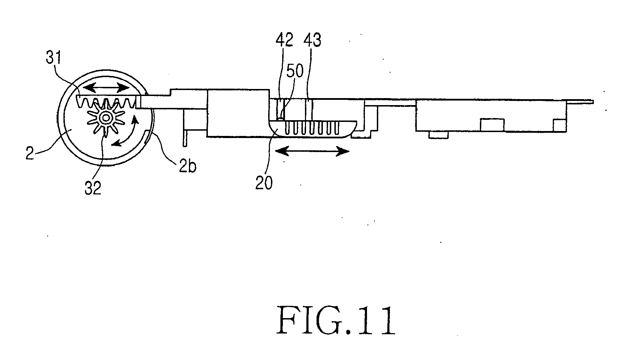

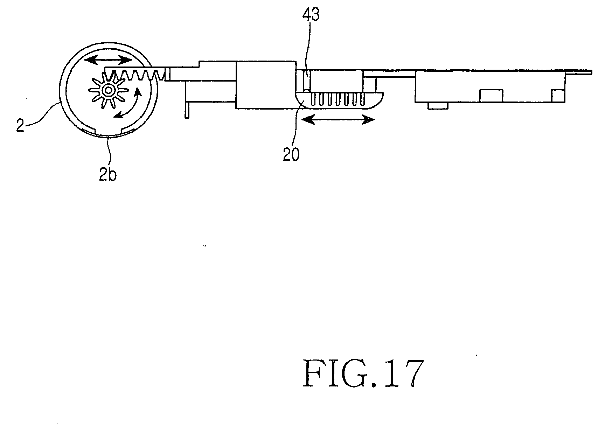

Referring to FIGS. 7 and 11, the second stopper groove 42 is preferably designed to rotate the opening 2b of the camera lens 2a 90°. Referring to FIGS. 7 and 17, the third stopper groove 43 is preferably designed to rotate the opening 2b of the camera lens 2a 180°.

The operation of an apparatus for rotating a camera lens module for a mobile terminal according to an embodiment of the present invention will now be described in more detail with reference to FIGS. 1 through 18.

Referring to FIGS. 1 and 2, the camera lens module 2 is mounted in a predetermined position of the mobile terminal 1 and the camera lever 20 is positioned adjacent to the camera lens module 2.

Referring to FIG. 4, the camera lever 20 is exposed within the movement hole 1a formed on the side of the mobile terminal 1. The camera lever 20 is mounted to slide along the longitudinal direction of the mobile terminal 1.

Referring to FIGS. 2 and 3, the rack gear 31 at the end of the camera lever 20 and the pinion gear 32 on the side of the camera lens module 2 are mounted to be engaged with each other.

In addition, the hinge unit 60 on the other side of the camera lens module 2 is rotatably combined with the mobile tenninal l.

Referring to FIG. 4, the opening 2b of the camera lens 2a is exposed through the exposure opening 1b fonned in the front side of the mobile tenninal 1.

Referring to FIGS. 6 and 7, an end of the detent spring 50 mounted in the camera lever 20 is inserted into the first stopper groove 41 of the stopper member.

In this state, a user can take a picture of a subject through the camera lens module 2 by using a photographing function of the mobile terminal 1.

At this time, referring to FIG. 9, if the user does not use the photographing function of the mobile terminal 1 and slides the camera lever 20 a predetermined length in a direction from top to bottom of the mobile terminal 1, the detent spring 50 is detached from the first stopper groove 41 and is inserted into the second stopper groove 42.

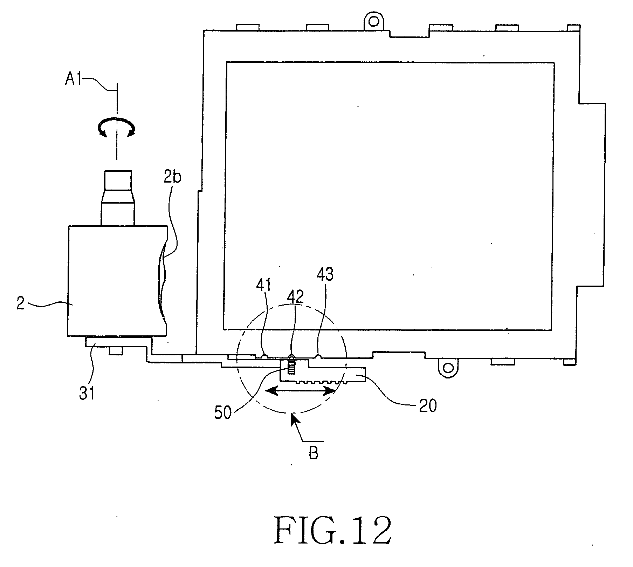

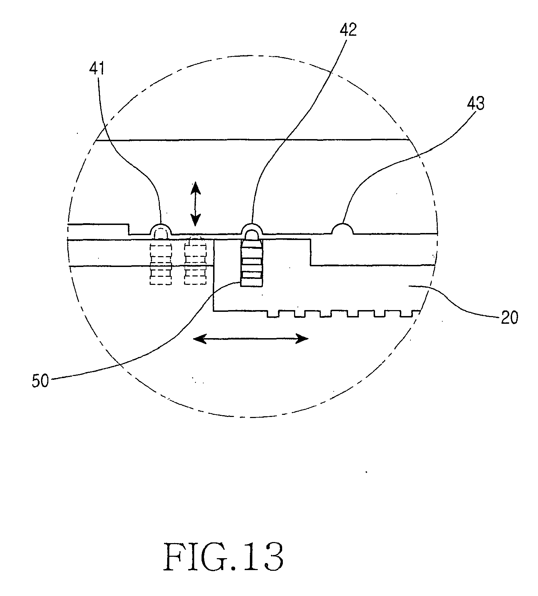

At this time, referring to FIGS. 12 and 13, the rack gear 31 at an end of the camera lever 20 also slides according to sliding of the camera lever 20 and the pinion gear 32 of the camera lens module 2 rotates according to sliding of the rack gear 31. Once the pinion gear 32 rotates, the camera lens module 2 also rotates about the hinge axis A1 of the hinge unit 60 that is substantially perpendicular to the longitudinal direction of the mobile terminal 1.

At this time, referring to FIG. 11, the opening 2b of the camera lens 2a preferably rotates 90°.

Referring to FIG. 9, the camera lens module 2 is hidden inside the mobile tenninal 1 and the user can use the mobile terminal 1 for other functions.

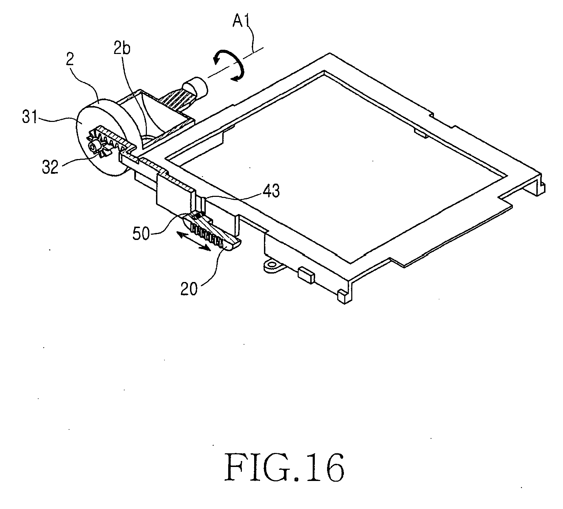

If the user desires to take photographs through the back side of the mobile terminal 1, as shown in FIGS. 16 through 18, the user slides the camera lever 20 again a predetermined length in a direction from top to bottom of the mobile terminal 1. The detent spring 50 is detached from the second stopper groove 42 and is inserted into the third stopper groove 43.

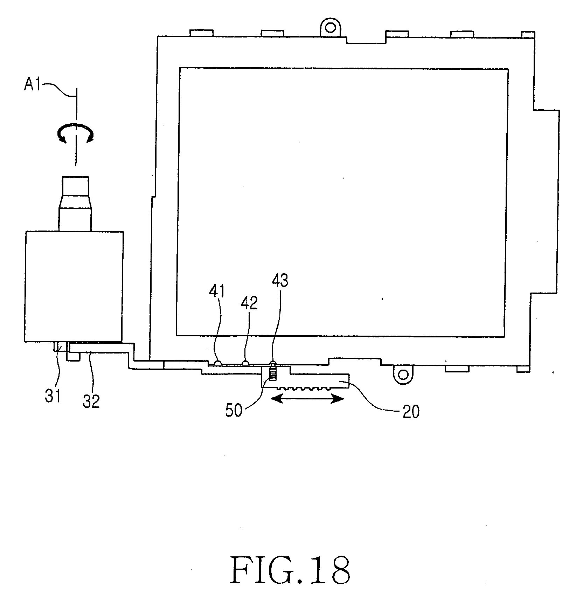

At this time, as shown in FIGS. 16 and 18, the rack gear 31 of the camera lens module 2 also slides with the sliding of the camera lever 20 and the pinion gear 32 of the camera lens module 2 rotates with sliding of the rack gear 31. The camera lens module 2 rotates about the hinge axis Al of the hinge unit 60 that is substantially perpendicular to the longitudinal direction of the mobile terminal 1.

Referring to FIG. 17, the opening 2b of the camera lens 2a, which was already rotated 90° by the second stopper groove 42, rotates another 90°. In other words, the opening 2b rotates a total of 180°.

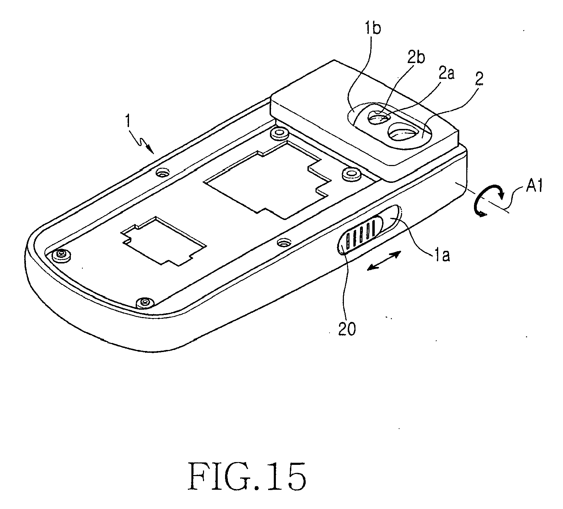

Referring to FIG. 15, the opening 2b of the camera lens 2a is exposed to the back side of the mobile terminal 1 through the exposure opening 1b formed in the back side of the mobile terminal 1.

In this state, the user can photograph through the back side of the mobile terminal 1 with the camera lens module 2.

If the user desires to return the opening 2b of the camera lens module 2 to the original position, the user slides the camera lever 20 towards the top of the mobile terminal 1. The pinion gear 32 rotates counterclockwise due to the sliding of the rack gear 31, and the camera lens module 2 gradually rotates through the first stopper groove 41, the second stopper groove 42, and the third stopper groove 43.

At this time, referring to FIGS. 4 and 15, if the user desires to rotate the camera lens module 2 of the mobile terminal 1 directly to the front or back side of the mobile terminal 1, the user slides the camera lever 20 along the longitudinal direction of the mobile tenninal 1. Then, the detent spring 50 is detached from the second stopper groove 42 and the camera lens module 2 rotates about the hinge axis Al of the hinge unit 60 clockwise and counterclockwise, thereby allowing photographing from the front or back side of the mobile terminal 1.

As described above, a camera lens module gradually rotates due to the sliding of a camera lever, thereby improving efficiency in the use of the camera lens module. Further, the camera lever exposes an opening of a camera lens to the outside a mobile terminal or hides the opening inside the mobile tenninal. Therefore, it is possible to protect the camera lens and prevent contamination of the camera lens by dust or other foreign substances.

While the invention has been shown and described with reference to certain embodiments thereof, it will be understood by those skilled in the art that various changes in form and details may be made therein without departing from the spirit and scope of the invention as defined by the appended claims.

## Claims

1. An apparatus for rotating a camera lens module mounted in a mobile terminal, the apparatus comprising:
a camera lever which is exposed outside the mobile terminal and slides; and
a rotating unit for rotating the camera lens module clockwise and counterclockwise according to the sliding of the camera lever and exposing an opening of a camera lens to the front or back side of the mobile terminal or hiding the opening of the camera lens inside the mobile terminal.

2. The apparatus of claim 1, wherein the rotating unit comprises:
a rack gear which is formed at an end of the camera lever; and
a pinion gear located on the camera lens module, the pinion gear being engaged with the rack gear to convert the sliding of the camera lever into rotation of the camera lens module.

3. The apparatus of claim 1, further comprising:
a hinge unit providing a hinge axis substantially perpendicular to a longitudinal direction of the mobile terminal.

4. The apparatus of claim 3, wherein
the hinge unit is located at a side of the camera lens module.

5. The apparatus of claim 3, wherein
the camera lens module rotates about the hinge axis.

6. The apparatus of claim 1, wherein
a movement hole is formed in the mobile terminal to expose the camera lever outside the mobile terminal and allow the camera lever to slide.

7. The apparatus of claim 1, wherein
at least one exposure opening is formed in the front or back side of the mobile terminal to expose the opening of the camera lens to the front or back side of the mobile terminal according to the rotation of the camera lens module.

8. The apparatus of claim 1, wherein
the camera lever is mounted on the side of the mobile terminal and moves linearly along the longitudinal direction of the mobile terminal.

9. The apparatus of claim 1, wherein
at least one stopper member is provided at the back side of the camera lever to gradually slide the camera lever and restrict rotation of the camera lens module according to insertion/detachment of a detent spring mounted in the camera lever.

10. The apparatus of claim 9, wherein the stopper member comprises:
a first stopper groove into which the detent spring is inserted when the camera lens module is rotated to expose the opening of the camera lens to the front side of the mobile terminal;
a second stopper groove into which the detent spring is inserted when the camera lens module rotates a predetermined amount so that the opening of the camera lens module is inside the mobile terminal; and
a third stopper groove into which the detent spring is inserted when the camera lens module rotates a predetermined amount so that the opening of the camera lens module faces the back side of the mobile terminal.

11. The apparatus of claim 10, wherein
the second stopper groove rotates the opening of the camera lens about 90°.

12. The apparatus of claim 10, wherein
the third stopper groove rotates the opening of the camera lens about 180°.

13. An apparatus for rotating a camera lens module mounted in a mobile terminal, the apparatus comprising:
a camera rotating module which allows an opening of a camera lens to be exposed to the front side or back side of the mobile terminal or hidden inside the mobile terminal by gradually rotating the camera lens module according to a sliding of a lever.

14. A rotatable camera lens module for a mobile terminal, comprising:
a camera lens module with a camera lens located in a camera lens opening, the camera lens module rotating about an axis;
a slidable camera lever;
a rack gear formed at an end of the camera lever;
a pinion gear located on the end of the camera lens module, the pinion gear being engaged with the rack gear so that a sliding movement of the camera lever rotates the camera lens module.

15. The apparatus of claim 14, further comprising:
a hinge unit located at a side of the camera lens module.

16. The apparatus of claim 14, wherein
a movement hole is formed in the mobile terminal to expose the camera lever to the outside of the mobile terminal and allow the camera lever to slide.

17. The apparatus of claim 14, further comprising:
a detent member located in the camera lever;
at least one stopper member located adjacent to the camera lever, the stopper member cooperating with the detent member to restrict rotation of the camera lens module.

18. The apparatus of claim 17, wherein the stopper member comprises:
a first stopper groove into which the detent member is inserted when the camera lens module is rotated so that the camera lens faces the front side of the mobile terminal;
a second stopper groove into which the detent member is inserted when the camera lens module is rotated so that the camera lens is inside the mobile terminal; and
a third stopper groove into which the detent member is inserted when the camera lens module is rotated so that the camera lens faces the back side of the mobile terminal.

19. The apparatus of claim 18, wherein
the second stopper groove is located at a position that corresponds to an approximately 90° rotation of the camera lens module.

20. The apparatus of claim 18, wherein
the third stopper groove is located at a position that corresponds to an approximately 180° rotation of the camera lens module.
